# EUROPÄISCHE PATENTSCHRIFT

(11) **EP 1 160 898 B1**
(45) Veröffentlichungstag und Bekanntmachung des Hinweises auf die Patenterteilung: **09.03.2005**
(21) Anmeldenummer: 01109445.5
(22) Anmeldetag: 24.04.2001
(51) Int. Cl.: H01M 4/48, C01G 19/02

(54) **Reduziertes Zinnoxid als Anodenmaterial in elektrochemischen Zellen**
Reduced tin oxides as anode active material in electrochemical cells
Oxyde d'étain réduit comme matériau anodique d'une cellule électrochimique

(30) Priorität: 25.05.2000 DE 10025762
(43) Veröffentlichungstag der Anmeldung: 05.12.2001
(73) Patentinhaber: MERCK PATENT GmbH, 64293 Darmstadt (DE)
(72) Erfinder: Heider, Lilia, 64560 Riedstadt (DE); Lotz, Natascha, 64390 Erzhausen (DE); Sandner, Tanja, 65428 Rüsselheim (DE); Rothenburger, Mathias, 55128 Mainz (DE); Amann, Anja, 64395 Brensbach (DE)

(56) Entgegenhaltungen:
- EP-A- 0 855 752
- EP-A- 0 867 955
- EP-A- 1 158 587
- US-E- R E35 818
- WU G T ET AL: "Editorial(s)" JOURNAL OF POWER SOURCES, ELSEVIER SEQUOIA S.A. LAUSANNE, CH, Bd. 75, Nr. 1, 1. September 1998 (1998-09-01), Seiten 181-182, XP004147188 ISSN: 0378-7753
- COURTNEY I A ET AL: "ELECTROCHEMICAL AND IN SITU X-RAY DIFFRACTION STUDIES OF THE REACTION OF LITHIUM WITH TIN OXIDE COMPOSITES" JOURNAL OF THE ELECTROCHEMICAL SOCIETY, ELECTROCHEMICAL SOCIETY. MANCHESTER, NEW HAMPSHIRE, US, Bd. 144, Nr. 6, 1. Juni 1997 (1997-06-01), Seiten 2045-2052, XP002072409 ISSN: 0013-4651
- HUGGINS R A: "Lithium alloy negative electrodes formed from convertible oxides" SOLID STATE IONICS, NORTH HOLLAND PUB. COMPANY. AMSTERDAM, NL, Bd. 113-115, 1. Dezember 1998 (1998-12-01), Seiten 57-67, XP004153277 ISSN: 0167-2738
- LI H ET AL: "Anodes based on oxide materials for lithium rechargeable batteries" SOLID STATE IONICS, NORTH HOLLAND PUB. COMPANY. AMSTERDAM, NL, Bd. 123, Nr. 1-4, August 1999 (1999-08), Seiten 189-197, XP004172930 ISSN: 0167-2738
- LEE W H ET AL: "Stoichiometry dependence of electrochemical performance of thin-film SnOx microbattery anodes deposited by radio frequency magnetron sputtering" JOURNAL OF POWER SOURCES, ELSEVIER SEQUOIA S.A. LAUSANNE, CH, Bd. 89, Nr. 1, Juli 2000 (2000-07), Seiten 102-105, XP004200307 ISSN: 0378-7753

## Beschreibung

Die Erfindung betrifft neuartige Materialien auf Basis modifizierten oxidischen Materialien, wie z.B. Zinnoxiden, als aktives Anodenmaterial in elektrochemischen Zellen.

Lithium-lonen-Batterien gehören zu den aussichtsreichsten Systemen für mobile Anwendungen. Die Einsatzgebiete reichen dabei von hochwertigen Elektronikgeräten (z.B. Mobiltelefone, Camcorder) bis hin zu Batterien für Kraftfahrzeuge mit Elektroantrieb.

Diese Batterien bestehen aus Kathode, Anode, Separator und einem nichtwäßrigen Elektrolyt. Als Kathode werden typischerweise Li(MnMe_{z})₂O₄, Li(CoMe_{z})O₂, Li(CoNiₓMe_{z})O₂ oder andere Lithium-Interkalations und Insertions-Verbindungen verwendet. Anoden können aus Lithium-Metall, weichen und harten Kohlenstoffen, Graphit, graphitischen Kohlenstoffen oder andere Lithium-Interkalations und Insertions-Verbindungen oder Legierungsverbindungen bestehen. Als Elektrolyt werden Lösungen mit Lithiumsalzen wie LiPF₆, LiBF₄, LiClO₄, LiAsF₆, LiCF₃SO₃, LiN(CF₃SO₂)₂ oder LiC(CF₃SO₂)₃ und deren Mischungen in aprotischen Lösungsmitteln verwendet.

In den aktuell kommerziell verfügbaren Lithium-lonen-Batterien wird als Anode Kohlenstoff eingesetzt. Allerdings weist dieses Anodensystem einige Probleme auf. In diesem System tritt ein hoher Kapazitätsverlust beim 1. Zyklus auf, der durch einen irreversiblen Einbau von Lithium in die Kohlenstoffstruktur zustande kommt. Weiterhin ist die Zyklenstabilität der zur Verfügung stehenden Kohlenstoffe bzw. Graphite nicht zufriedenstellend. Ferner kommt der Sicherheitsaspekt hinzu, der durch kinetische Begrenzungen kritische Parameter hervorrufen kann.

Zur Verbesserung der Anodeneigenschaften werden neue Systeme gesucht, die z.B. die Kohlenstoffanode ersetzen. Hier werden vielfältige Anstrengungen unternommen. Die Kohlenstoffmaterialien werden z.B. durch oxidische Materialien oder Legierungen ersetzt. Wolfenstine untersucht in Journal of Power Sources 75 (1998) die Eignung von Zinnoxid-Zinn Mischungen als Anodenmaterial für LithiumIonen-Batterien. Der irreversible Li Verlust durch Li₂O-Bildung soll durch die bevorzugt Verwendung von SnO gegenüber SnO₂ minimiert werden. In EP 0823742 werden mit verschiedenen Metallen dotierte Zinn-Mischoxide beschrieben. Auch in US 5654114 wird die Verwendung von Zinnoxiden als Anodenmaterial für sekundäre Lithium-lonen-Batterien beschrieben. Alle untersuchten Systeme weisen den Mangel auf, daß Li zu Li₂O umgesetzt wird. Dadurch wird eine große Menge Li gebunden, was für die elektrochemischen Prozesse in der Batterie nicht mehr zur Verfügung steht.

Aufgabe der vorliegenden Erfindung ist es, Anodenmaterialien zur Verfügung zu stellen, die ein besseres Lade/Entladeverhalten im Vergleich zum Kohlenstoff bieten. Das bessere Verhalten soll durch höhere Kapazitäten und eine gute Zyklenstabilität charakterisiert sein.

Die erfindungsgemäße Aufgabe wird gelöst durch den Einsatz von modifizierten Zinnoxiden, die als Anodenmaterial in elektrochemischen Zellen verwendet werden.

Es wurde gefunden, daß eine Reduzierung des Zinnoxids mittels reduzierender Gase zu einem verbesserten Anodensystem führt. Dieses System besteht aus einer Mischung von Zinndioxid und Zinnpartikeln, welches fein verteilt in den Zinndioxid Körnern vorliegt und den herkömmlichen Additiven (z.B. PTFE, Lösungsmittel, Leitruß).

Überraschend wurde gefunden, daß die modifizierten Zinnoxid-Systeme hervorragende elektrochemische Eigenschaften aufweisen. Der irreversible Lithium-Verlust beim 1. Zyklus ist weiterhin zu beobachten. Dieser ist allerdings nicht so ausgeprägt wie vor der Behandlung des Zinnoxids SnO₂.

Die im Stand der Technik beschriebenen Verwendungen von Zinnoxiden für Anodenmaterialien weisen das Problem der Partikelagglomeration auf. Überraschend wurde gefunden, daß mit dem erfindungsgemäßen Verfahren Partikel mit definiertem Durchmesser hergestellt werden können. Mit dem erfindungsgemäßen Verfahren können Primärpartikel im nm-Bereich und Sekundärpartikel mit einem Durchmesser unter 10 µm hergestellt werden. Diese kleinen Partikel führen zur Vergrößerung der aktiven Oberfläche.

Das Verfahren zur Herstellung des Anodenmaterials ist dadurch gekennzeichnet, daß
a) eine Zinnchlorid-Lösung mit Harnstoff versetzt wird,
b) die Lösung mit Urotropin versetzt wird,
c) das so erhaltene Sol in Petrolether emulgiert wird,
d) das erhaltene Gel gewaschen und das Lösungsmittel abgesaugt wird,
e) das Gel getrocknet und getempert wird und
f) das erhaltene SnO₂ in einem begasbaren Ofen einem reduzierendem Gasstrom ausgesetzt wird.

Die erfindungsgemäßen Materialien sind für den Einsatz in elektrochemischen Zellen, bevorzugt in Batterien, besonders bevorzugt in sekundären Lithium-lonen-Batterien, geeignet.

Das erfindungsgemäße Anodenmaterial kann in sekundären Lithium-Ionen-Batterien mit gängigen Elektrolyten eingesetzt werden. Geeignet sind z.B. Elektrolyte mit Leitsalzen ausgewählt aus der Gruppe LiPF₆, LiBF₄, LiClO₄, LiAsF₆, LiCF₃SO₃, LiN(CF₃SO₂)₂ oder LiC(CF₃SO₂)₃ und deren Mischungen. Die Elektrolyte können auch organische Isocyanate (DE 199 44 603) zur Herabsetzung des Wassergehaltes enthalten. Ebenso können die Elektrolyte organische Alkalisalze (DE 199 10 968) als Additiv enthalten. Geeignet sind Alkaliborate der allgemeinen Formel

Li⁺ B⁻(OR¹)ₘ (OR²)ₚ

worin,
- m und p: 0, 1, 2, 3 oder 4 mit m+p=4 und
- R¹ und R²: gleich oder verschieden sind,
gegebenenfalls durch eine Einfach- oder Doppelbindung direkt miteinander verbunden sind,
jeweils einzeln oder gemeinsam die Bedeutung eines aromatischen oder aliphatischen Carbon-, Dicarbon- oder Sulfonsäurerestes haben, oder
jeweils einzeln oder gemeinsam die Bedeutung eines aromatischen Rings aus der Gruppe Phenyl, Naphthyl, Anthracenyl oder Phenanthrenyl, der unsubstituiert oder ein- bis vierfach durch A oder Hal substituiert sein kann, haben oder
jeweils einzeln oder gemeinsam die Bedeutung eines heterocyclischen aromatischen Rings aus der Gruppe Pyridyl, Pyrazyl oder Bipyridyl, der unsubstituiert oder ein- bis dreifach durch A oder Hal substituiert sein kann, haben oder
jeweils einzeln oder gemeinsam die Bedeutung einer aromatischen Hydroxysäure aus der Gruppe aromatischer Hydroxy-Carbonsäuren oder aromatischer Hydroxy-Sulfonsäuren, der unsubstituiert oder einbis vierfach durch A oder Hal substituiert sein kann,
haben und
- Hal: F, Cl oder Br
und
A Alkyl mit 1 bis 6 C-Atomen, das ein- bis dreifach halogeniert sein kann, bedeuten. Ebenso geeignet sind Alkalialkoholate der allgemeinen Formel

Li⁺ OR⁻

sind, worin R
die Bedeutung eines aromatischen oder aliphatischen Carbon-, Dicarbon- oder Sulfonsäurerestes hat, oder
die Bedeutung eines aromatischen Rings aus der Gruppe Phenyl, Naphthyl, Anthracenyl oder Phenanthrenyl, der unsubstituiert oder ein- bis vierfach durch A oder Hal substituiert sein kann, hat oder
die Bedeutung eines heterocyclischen aromatischen Rings aus der Gruppe Pyridyl, Pyrazyl oder Bipyridyl, der unsubstituiert oder ein- bis dreifach durch A oder Hal substituiert sein kann, hat oder
die Bedeutung einer aromatischen Hydroxysäure aus der Gruppe aromatischer Hydroxy-Carbonsäuren oder aromatischer Hydroxy-Sulfonsäuren, der unsubstituiert oder ein- bis vierfach durch A oder Hal substituiert sein kann,
hat und
- Hal: F, Cl, oder Br,
und
A Alkyl mit 1 bis 6 C-Atomen, das ein- bis dreifach halogeniert sein kann.

Auch Lithiumkomplexsalze der Formel 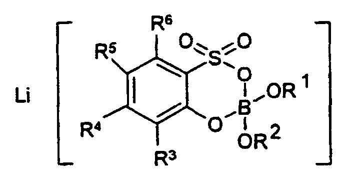 wobei
R¹ und R² gleich oder verschieden sind, gegebenenfalls durch eine Einfach- oder Doppelbildung direkt miteinander verbunden sind, jeweils einzeln oder gemeinsam die Bedeutung eines aromatischen Rings aus der Gruppe Phenyl, Naphthyl, Anthracenyl oder Phenanthrenyl, der unsubstituiert oder ein- bis sechsfach durch Alkyl (C₁ bis C₆), Alkoxygruppen (C₁ bis C₆) oder Halogen (F, Cl, Br) substituiert sein kann, haben,
oder jeweils einzeln oder gemeinsam die Bedeutung eines aromatischen heterocyclischen Rings aus der Gruppe Pyridyl, Pyrazyl oder Pyrimidyl, der unsubstituiert oder ein- bis vierfach durch Alkyl (C₁ bis C₆), Alkoxygruppen (C₁ bis C₆) oder Halogen (F, Cl, Br) substituiert sein kann, haben,
oder jeweils einzeln oder gemeinsam die Bedeutung eines aromatischen Rings aus der Gruppe Hydroxylbenzoecarboxyl, Hydroxylnaphthalincarboxyl, Hydroxylbenzoesulfonyl und Hydroxylnaphthalinsulfonyl, der unsubstituiert oder ein- bis vierfach durch Alkyl (C₁ bis C₆), Alkoxygruppen (C₁ bis C₆) oder Halogen (F, Cl, Br) substituiert sein kann, haben,
R³-R⁶ können jeweils einzeln oder paarweise, gegebenenfalls durch eine Einfach oder Doppelbindung direkt miteinander verbunden, folgende Bedeutung haben:
1. Alkyl (C₁ bis C₆),Alkyloxy (C₁ bis C₆) oder Halogen (F, Cl, Br)
2. ein aromatischer Ring aus den Gruppen

Phenyl, Naphthyl, Anthracenyl oder Phenanthrenyl, der unsubstituiert oder ein- bis sechsfach durch Alkyl (C₁ bis C₆), Alkoxygruppen (C₁ bis C₆) oder Halogen (F, Cl, Br) substituiert sein kann,

Pyridyl, Pyrazyl oder Pyrimidyl, der unsubstituiert oder ein- bis vierfach durch Alkyl (C₁ bis C₆), Alkoxygruppen (C₁ bis C₆) oder Halogen (F, Cl, Br) substituiert sein kann,
die über folgendes Verfahren (DE 199 32 317) dargestellt werden
a) 3-, 4-, 5-, 6-substituiertes Phenol in einem geeigneten Lösungsmittel mit Chlorsulfonsäure versetzt wird,
b) das Zwischenprodukt aus a) mit Chlortrimethylsilan umgesetzt, filtriert und fraktioniert destilliert wird,
c) das Zwischenprodukt aus b) mit Lithiumtetramethanolat-borat(1-), in einem geeigneten Lösungsmittel umgesetzt und daraus das Endprodukt isoliert wird, können im Elektrolyten enthalten sein.

Ebenso können die Elektrolyte Verbindungen der folgenden Formel (DE 199 41 566)

[([R¹(CR²R³)ₖ]ₗAₓ)_{y}Kt]^{+ -}N(CF₃)₂

wobei
- Kt=: N, P, As, Sb, S, Se
- A=: N, P, P(O), O, S, S(O), SO₂, As, As(O), Sb, Sb(O)
R¹, R² und R³
gleich oder verschieden
H, Halogen, substituiertes und/oder unsubstituiertes Alkyl CₙH₂ₙ₊₁, substituiertes und/oder unsubstituiertes Alkenyl mit 1-18 Kohlenstoffatomen und einer oder mehreren Doppelbindungen, substituiertes und/oder unsubstituiertes Alkinyl mit 1-18 Kohlenstoffatomen und einer oder mehreren Dreifachbindungen, substituiertes und/oder unsubstituiertes Cycloalkyl CₘH₂ₘ₋₁, ein- oder mehrfach substituiertes und/oder unsubstituiertes Phenyl, substituiertes und/oder unsubstituiertes Heteroaryl,
A kann in verschiedenen Stellungen in R¹, R² und/oder R³ eingeschlossen sein,
Kt kann in cyclischen oder heterocyclischen Ring eingeschlossen sein,
die an Kt gebundenen Gruppen können gleich oder verschieden sein
mit
- n=: 1-18
- m=: 3-7
- k=: 0, 1-6
- l=: 1 oder 2 im Fall von x=1 und 1 im Fall x=0
- x=: 0,1
- y=: 1-4
bedeuten, enthalten. Das Verfahren zur Herstellung dieser Verbindungen ist dadurch gekennzeichnet, daß ein Alkalisalz der allgemeinen Formel

D^{+ -}N(CF₃)₂ (II)

mit D⁺ ausgewählt aus der Gruppe der Alkalimetalle in einem polaren organischen Lösungsmittel mit einem Salz der allgemeinen Formel

[([R¹(CR²R³)ₖ]ₗAₓ)_{y}Kt]^{+ -}E (III)

wobei
Kt, A, R¹, R², R³, k, l, x und y die oben angegebene Bedeutung haben und
-E F⁻, Cl⁻, Br⁻, I⁻, BF₄⁻ , ClO₄⁻ , AsF₆⁻, SbF₆⁻ oder PF₆⁻ bedeutet, umgesetzt wird.

Aber auch Elektrolyte enthaltend Verbindungen der allgemeinen Formel (DE 199 53 638)

X-(CYZ)ₘ-SO₂N(CR¹R²R³)₂

mit
- X: H, F, Cl, CₙF₂ₙ₊₁, CₙF₂ₙ₋₁, (SO₂)ₖN(CR¹R²R³)₂
- Y: H, F, Cl
- Z: H, F, Cl
- R¹, R², R³: H und/oder Alkyl, Fluoralkyl, Cycloalkyl
- m: 0-9 und falls X=H, m≠0
- n: 1-9
- k: 0, falls m=0 und k=1, falls m=1-9,
hergestellt durch die Umsetzung von teil- oder perfluorierten Alkysulfonylfluoriden mit Dimethylamin in organischen Lösungsmitteln sowie Komplexsalze der allgemeinen Formel (DE 199 51 804)

M^{x+} [EZ]^{y-}_{x/y}

worin bedeuten:
- x,y: 1,2,3,4,5,6
- M^{X+}: ein Metallion
- E: einer Lewis-Säure, ausgewählt aus der Gruppen
BR¹R²R³, AIR¹R²R³, PR¹R²R³R⁴R⁵, AsR¹R²R³R⁴R⁵, VR¹R²R³R⁴R⁵,
R¹ bis R⁵ gleich oder verschieden, gegebenenfalls durch eine Einfach- oder Doppelbildung direkt miteinander verbunden sind, jeweils einzeln oder gemeinsam die Bedeutung
eines Halogens (F, Cl, Br),
eines Alkyl- oder Alkoxyrestes (C₁ bis C₈) der teilweise oder vollständig durch F, Cl, Br substituiert sein kann,
eines, gegebenenfalls über Sauerstoff gebundenen aromatischen Rings aus der Gruppe Phenyl, Naphthyl, Anthracenyl oder Phenanthrenyl, der unsubstituiert oder ein- bis sechsfach durch Alkyl (C₁ bis C₈) oder F, Cl, Br substituiert sein kann
eines, gegebenenfalls über Sauerstoff gebundenen aromatischen heterocyclischen Rings aus der Gruppe Pyridyl, Pyrazyl oder Pyrimidyl, der unsubstituiert oder ein- bis vierfach durch Alkyl (C₁ bis C₈) oder F, Cl, Br substituiert sein kann, haben können und
- Z: OR⁶, NR⁶R⁷, CR⁶R⁷R⁸, OSO₂R⁶, N(SO₂R⁶)(SO₂R⁷), C(SO₂R⁶)(SO₂R⁷)(SO₂R⁸), OCOR⁶, wobei
R⁶ bis R⁸ gleich oder verschieden sind, gegebenenfalls durch eine Einfach- oder Doppelbindung direkt miteinander verbunden sind, jeweils einzeln oder gemeinsam die Bedeutung
eines Wasserstoffs oder die Bedeutung wie R¹ bis R⁵ haben, hergestellt durch Umsetzung von einem entsprechenden Bor- oder Phosphor-Lewis-Säure-Solvenz-Adukt mit einem Lithium- oder Tetraalkylammonium-Imid, -Methanid oder -Triflat, können verwendet werden.

Auch Boratsalze (DE 199 59 722) der allgemeinen Formel 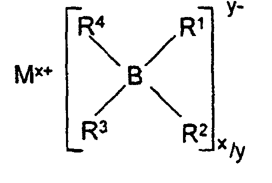 worin bedeuten:
- M: ein Metallion oder Tetraalkylammoniumion
- x,y: 1, 2, 3, 4, 5 oder 6

R¹ bis R⁴ gleich oder verschieden, gegebenenfalls durch eine Einfach- oder Doppelbindung direkt miteinander verbundener Alkoxyoder Carboxyreste (C₁-C₈) können enthalten sein. Hergestellt werden diese Boratsalze durch Umsetzung von Lithiumtetraalkoholatborat oder einem 1:1 Gemisch aus Lithiumalkoholat mit einem Borsäureester in einem aprotischen Lösungsmittel mit einer geeigneten Hydroxyl- oder Carboxylverbindung im Verhältnis 2:1 oder 4:1.

Ebenso können die erfindungsgemäßen Anodenmaterialien in Systemen mit polymerbeschichteten Lithium-Mischoxid-Partikeln für Kathodenmaterialien (DE 19946066) eingesetzt werden. Das Verfahren zur Herstellung von mit einem oder mehreren Polymeren beschichteten Lithium-Mischoxid-Partikeln ist dadurch gekennzeichnet, daß die Partikel in einem Lösungsmittel suspendiert werden und danach die beschichteten Partikel abfiltriert, getrocknet und gegebenenfalls calciniert werden. Auch können die erfindungsgemäßen Anodenmaterialien in Systemen mit Kathoden eingesetzt werden, die aus Lithium-Mischoxid-Partikeln bestehen, die mit einem oder mehreren Metalloxiden beschichtet sind (DE 19922522). Das Verfahren zur Herstellung von mit einem oder mehreren Metalloxiden beschichteten Lithium-Mischoxid-Partikeln ist dadurch gekennzeichnet, daß die Partikel in einem organischen Lösungsmittel suspendiert werden, die Suspension mit einer Lösung einer hydrolysierbaren Metailverbindung und einer Hydrolyselösung versetzt und danach die beschichteten Partikel abfiltriert, getrocknet und gegebenenfalls calciniert werden.

Nachfolgend wird ein allgemeines Beispiel der Erfindung näher erläutert.

Als Ausgangsverbindungen werden 1 - 2 Molare, bevorzugt 2 Molare, Zinntetrachlorid-Lösungen eingesetzt. Die Lösung wird unter Kühlung und intensivem Rühren in Wasser gegeben. Der entstehende weiße Niederschlag im Falle des Sn-Systems wird durch Erwärmung aufgelöst. Nach dem Abkühlen auf Raumtemperatur wird die dem System entsprechende Harnstoffmenge zugegeben und vollständig gelöst. Die Zugabe des Harnstoffs bzw. das Lösungsverhalten ist Systemabhängig.

Durch Zugabe von Wasser wird die gewünschte Konzentration der Lösung eingestellt (siehe Angabe oben). Die Lösung wird auf Temperaturen zwischen 0 und 10°C, bevorzugt auf 5-7°C, gekühlt. Im bevorzugten Verhältnis 1:1 wird eine 3,5 Molare Hexamethylentetramin-Lösung zugegeben. Das Verhältnis gilt wiederum für das Zinnsystem. Es kann auch mit 10% Unter- oder Überschuß an Hexamethylentetramin gearbeitet werden. Das Gemisch wird solange gerührt, bis das Sol klar ist.

Benzin (Petrolether) wird mit 0,5 bis 1,5%, bevorzugt 0,7%, handelsüblichen Emulgatoren, bevorzugt mit Span 80, versetzt. Die Lösung wird auf Temperaturen zwischen 30°C und 70°C, bevorzugt auf 50°C, erwärmt. Die oben beschriebene Lösung wird unter ständigem Rühren zugegeben. Das sich bildende Gel wird nach 3 bis 20 min, bevorzugt nach 10 min, mit einer Ammoniak-Lösung versetzt und der pH-Wert derartig stabilisiert, daß keine Peptisation des Gels stattfindet. Nach dem Dekantieren der organischen Phase wird mit einem geeigneten organischen Lösungsmittel, bevorzugt mit Petrolether, gewaschen. Zum Entfernen des Emulgators und organischer Verunreinigungen wird die Lösung anschließend mit Detergenzien, vorzugsweise mit Triton, versetzt. Die Lösung wird abgesaugt und das Gel mit Wasser und Aceton gewaschen.

Das Gel wird getrocknet und gegebenenfalls getempert. Wird ein SnO-System gewünscht reicht eine Trocknung bis maximal 230°C, bevorzugt bei 75°C bis 110°C. Wird ein SnO₂-System gewünscht erfolgt nach der Trocknung eine Temperung. Die Temperung wird bei Temperaturen zwischen 230 und 500°C, bevorzugt bei Temperaturen zwischen 55 und 350°C, ganz besonders bevorzugt bei 350°C, durchgeführt. Getempert wird zwischen 10 min und 5 Stunden, bevorzugt zwischen 90 min und 3 Stunden, ganz besonders bevorzugt 2 Stunden.

Das getemperte Material wird in einem begasbaren Ofen, z.B. einem Muffelofen, einem Rohr- oder Kammerofen, mit einem reduzierenden Gas begast. Das Reduktionsgasgemisch kann z.B. Wasserstoff und Argon bzw. Stickstoff sein. Der Gasstrom wird auf 5-15 Liter/Stunde, bevorzugt auf 10 Liter/Stunde eingestellt. Das Reduktionsgasgemisch wird über die Dauer von 0,5 bis 5 Stunden, bevorzugt über 2,5 bis 3,5 Stunden dem System zugeführt.

Die Temperatur für den Reduktionsprozeß kann variiert werden von 230°C bis 600°C, bevorzugt im Bereich von 300 - 500°C, besonders bevorzugt bei 500°C.

Je nach Einwirkdauer der Temperatur und der Reduziergasmenge werden unterschiedliche Konzentrationen an Sn in der SnO₂ Matrix gebildet. Für die elektrochemischen Eigenschaften in der galvanischen Zelle hat sich für das Anodenmaterial eine Konzentration von Zinn in der SnO₂ Matrix von 20 - 60 Gew%, bevorzugt bei 30 - 40%, bevorzugt bei 38% herauskristallisiert.

Die gemessene Kapazität der Anode bestehend aus einem SnO₂-Sn-System liegt nach dem 3. Zyklus bemerkenswert noch bei ca. 600 mAh/g.

Die anfängliche Kapazität liegt deutlich höher als bei der Kohlenstoff-Anode. Bei fortschreitendem Zyklisieren wird die Kapazität des Kohlenstoffs erreicht.

Die Reversibilität, d.h. die effektive Ladung und Entladung der Zellen, liegt bei ca. 90%.

Die nachfolgenden Beispiele sollen die Erfindung näher erläutern, ohne sie jedoch zu beschränken.

### Beispiele

### Beispiel 1

### Sol-Gel Synthese

### Lösung 1:

In einem Vierhalskolben mit Rührer werden 250 ml Wasser vorgelegt. Unter intensivem Rühren (350 U/min) und Eiskühlung werden innerhalb von 90 min 235 ml SnCl₄ zugetropft. Es bildete sich ein weißer Niederschlag, der durch Erwärmen der Lösung sich zu lösen beginnt. Die Erwärmung erfolgt über 60 min und wird nach vollständiger Auflösung des Niederschlages und Erreichen der Siedetemperatur (122°C) beendet. Nach dem Abkühlen auf Raumtemperatur werden 600 g Harnstoff eingetragen und vollständig aufgelöst. Weiterhin wird die ensprechende Menge an Dotierverbindung zugegeben und gelöst. Der endotherme Lösevorgang führt zu einer klaren hochviskosen Lösung, die mit Wasser zu einem Liter Lösung aufgefüllt wird.

### Beispiel 2

### Lösung 2:

Zum Herstellen der Lösung 2 werden 490 g Urotropin (Hexamethylentetramin=HMT) mit 600 ml Wasser im Becherglas auf dem Magnetrührmotor gelöst und nach erfolgtem leicht exothermen Auflösen zu einem Liter leicht grünlich-trüber Lösung aufgefüllt.

### Beispiel 3

### Emulsionsbildung:

Im 1 Liter Becherglas werden 2,0 g Span80 (= 0,74%) mit 400 ml Benzin versetzt und bei 350 U/min vermischt. Die Temperatur wird mittels eines Wasserbades auf 50°C eingestellt.

Das in Beispiel 2 beschriebene, frisch angesetzte Gemisch wird bei 400 U/min zugegeben und emulgiert. Nach ca. 4 min entsteht das Gel.

Nach 10 min werden 10 ml 1%-iger Ammoniak zugegeben und noch weitere 6 min bei 400 U/min emulgiert

### Beispiel 4

### Phasentrennung und Extraktion:

Die organische Benzin-Phase wird dekantiert und mit 2 x 35 ml Petrolether nachgewaschen und getrennt.
Zum Entfernen des Emulgators wird das Gel mit 30 ml Triton-Lösung (Konzentration der Triotonlösugn kann dem System angepasst werden) versetzt und 6 min im Becherglas aufgeschlämmt. Das Gemisch wird über eine Nutsche abgesaugt und mit 200 ml Wasser nachgewaschen. Danach wird mit Aceton überschichtet und exakt 15 min abgesaugt.

### Beispiel 5

### Trocknung und Temperung:

Es wird einen Tag an der Luft und einen Tag im Trockenschrank bei 60°C getrocknet.

Aussehen vor dem Tempern:
weißlich transparente gleichmäßige Kugeln
Temperung: Programm: 20°C→ 180 min→350°C/120 min→20°C Aussehen: fast unverändert

### Beispiel 6

### Reduzierung:

Die Reduzierung der hergestellten SnOₓ Partikel erfolgt in definierten reduzierenden Medien und führt zur Erzeugung von Sn Metallpartikeln in der SnO₂ Matrix.

Hierbei wird das SnO₂, welches unter den Beispielen 1- 5 beschrieben ist, in einem reduzierenden Gasstrom erhitzt. Das Reduktionsgemisch setzt sich auf Wasserstoff und Argon zusammen. Dabei liegt der Wasserstoff Anteil bei 7,5%.

Der Reduktionsprozeß wird 3 Stunden bei einer Temperatur von 500°C durchgeführt. Es wird ein Gasstrom von 10 Liter/Stunde eingestellt.

Für die elektrochemischen Eigenschaften in der galvanischen Zelle hat sich für das Anodenmaterial eine bevorzugte Konzentration von Zinn in der SnO₂ Matrix von 38% herauskristallisiert.

Die gemessene Kapazität der Anode bestehend aus einem SnO₂-Sn-System liegt nach dem 3. Zyklus bei ca. 600 mAh/g.

Die Reversibilität, d.h. die effektive Ladung und Entladung der Zellen, liegt bei ca. 90%.

## Patentansprüche

1. Verfahren zur Herstellung eines Anodenmaterials auf Basis von reduziertem Zinndioxid, **dadurch gekennzeichnet, dass**
a) eine Zinnchlorid-Lösung mit Harnstoff versetzt wird,
b) die Lösung mit Urotropin versetzt wird,
c) das so erhaltene Sol in Petrolether emulgiert wird,
d) das erhaltene Gel gewaschen und das Lösungsmittel abgesaugt wird,
e) das Gel getrocknet und getempert wird und
f) das erhaltene SnO₂ in einem begasbaren Ofen einem reduzierendem Gasstrom ausgesetzt wird.

2. Anodenmaterial auf Basis von reduziertem Zinndioxid, erhältlich durch die Verfahrensschritte gemäß Anspruch 1.

3. Elektrochemische Zelle bestehend aus Kathode, Anode, Separator und Elektrolyt, **dadurch gekennzeichnet, dass** sie Anodenmaterial gemäß Anspruch 2 enthält.

4. Verwendung von Anodenmaterial gemäß Anspruch 2 in elektrochemischen Zellen, Batterien und sekundären Lithiumbatterien.

## Claims

1. Process for the production of an anode material based on reduced tin dioxide, **characterised in that**
a) urea is added to a tin chloride solution,
b) urotropin is added to the solution,
c) the resultant sol is emulsified in petroleum ether,
d) the resultant gel is washed, and the solvent is removed by suction,
e) the gel is dried and conditioned, and
f) the resultant SnO₂ is exposed to a reducing gas stream in an aeratable oven.

2. Anode material based on reduced tin dioxide, obtainable by the process steps according to Claim 1.

3. Electrochemical cell consisting of cathode, anode, separator and electrolyte, **characterised in that** it contains anode material according to Claim 2.

4. Use of anode material according to Claim 2 in electrochemical cells, batteries and secondary lithium batteries

## Revendications

1. Procédé pour la fabrication d'un matériau d'anode sur la base de dioxyde d'étain réduit, **caractérisé en ce que**:
a) de l'urée est additionnée à une solution de chlorure d'étain,
b) de l'urotropine est additionnée à la solution,
c) le sol résultant est émulsionné dans de l'éther de pétrole,
d) le gel résultant est lavé, et le solvant est enlevé par aspiration,
e) le gel est séché et conditionné, et
f) le SnO₂ résultant est exposé à un flux gazeux réducteur dans un four aérable.

2. Matériau d'anode sur la base de dioxyde d'étain réduit, pouvant être obtenu au moyen des étapes de procédé selon la revendication 1.

3. Cellule électrochimique constituée par une cathode, une anode, un séparateur et un électrolyte, **caractérisée en ce qu'**elle contient un matériau d'anode selon la revendication 2.

4. Utilisation d'un matériau d'anode selon la revendication 2 dans des cellules électrochimiques, des accumulateurs et des accumulateurs au lithium secondaires.
